# EUROPÄISCHE PATENTSCHRIFT

(11) **EP 1 587 355 B1**
(45) Veröffentlichungstag und Bekanntmachung des Hinweises auf die Patenterteilung: **02.11.2006**
(21) Anmeldenummer: 03780123.0
(22) Anmeldetag: 05.12.2003
(51) Int. Cl.: A01C 7/18, A01C 7/20

(54) **SAATGUTFÜHRUNG**
SEED GUIDE
DISPOSITIF DE GUIDAGE DE SEMENCES

(30) Priorität: 10.01.2003 US 339970
(43) Veröffentlichungstag der Anmeldung: 26.10.2005
(73) Patentinhaber: DEERE & COMPANY, Moline, Illinois 61265-8098 (US)
(72) Erfinder: THIEMKE, Daniel Bruce, Rock Island, IL 61201 (US); VALDEZ, Jose Miguel, Montpelier, IA 52759 (US)
(74) Vertreter: Holst, Sönke
(86) Internationale Anmeldenummer: PCT/EP2003/013742
(87) Internationale Veröffentlichungsnummer: WO 2004/062345

(56) Entgegenhaltungen:
- US-A1- 2002 043 200
- US-A1- 2003 159 631
- US-B1- 6 173 664
- US-B1- 6 209 466
- US-B1- 6 237 514
- US-B1- 6 332 413

## Beschreibung

Die Erfindung betrifft eine Kombination aus einer Saatgutführung und einem rotierbaren Geschwindigkeitsregulator für Saatgut für ein Ausbringsystem einer Sämaschine, mit einer Saatgutführung, welche im Wesentlichen j-förmig ausgebildet ist, mit zwei im Wesentlichen geraden Abschnitten, welche durch einen bogenförmigen Abschnitt miteinander verbunden sind, wobei einer der geraden Abschnitte ein unteres Ende ausbildet, und mit einer Saatgutrinne, welche an dem unteren Ende endet.

Landwirtschaftliche Sämaschinen, wie z. B. eine Reihensämaschine oder eine Korndrillmaschine, bringen Saatgut in einer gewünschten Tiefe in mehrere in einem Ackerboden ausgebildete Saatfurchen aus. Im Falle einer Reihensämaschine werden mehrere Reihensäeinheiten normalerweise durch Bodenkontakt unter Verwendung von Rädern, Antriebswellen, Zahnrädern, Verteilergetrieben, Ketten oder dergleichen angetrieben. Jede Reihensäeinheit umfasst einen Rahmen, welcher beweglich mit einem Werkzeughalter verbunden ist. Der Rahmen kann einen Hauptbehälter für Saatgut, einen Behälter für Herbizide und einen Behälter für Insektizide tragen. Wenn granulare Herbizide und Insektizide eingesetzt werden, können die mit einem Ausbringen des Granulats in die Saatfurchen verbundenen Dosiermechanismen relativ einfach ausgebildet sein. Andererseits sind die zur genauen Dosierung des Saatguts erforderlichen Mechanismen, welche das Saatgut in vorgegebener Menge ausbringen und an relativ zur Saatfurche vorgegebenen Positionen platzieren, relativ kompliziert ausgebildet.

Die mit der Dosierung und Ausbringung des Saatguts verbundenen Mechanismen können im wesentlichen in ein Dosiersystem für Saatgut und in ein Ausbringsystem für Saatgut unterteilt werden, welche miteinander in Verbindung stehen. Das Dosiersystem nimmt das Saatgut aus dem von dem Rahmen getragenen Saatgutbehälter in Form von Massengut auf. Es können verschiedene Arten von Dosiersystemen eingesetzt werden, wie z. B. Säplatten, Fingerplatten und Säscheiben. Im Falle eines Säscheiben-Dosiersystems ist eine Säscheibe mit mehreren auf dem Umfang der Säscheibe beabstandeten Saatgutzellen ausgebildet. Das Saatgut wird in die Saatgutzellen befördert, wobei je nach Größe und Ausbildung der Saatgutzellen ein oder mehrere Saatkörner in jede Saatgutzelle befördert werden. Ein Vakuum oder Druckluftstrom kann in Verbindung mit der Säscheibe eingesetzt werden, um das Befördern des Saatguts in die Saatgutzellen zu unterstützen. Die Saatkörner werden getrennt und in einer vorgegebenen Rate an das Ausbringsystem für Saatgut abgegeben.

Das Ausbringsystem für Saatgut kann als ein schwerkraftgesteuertes und als ein antriebsunterstütztes Ausbringsystem eingestuft werden. Im Falle eines schwerkraftgesteuerten Ausbringsystems ist ein Saatgutleiter vorgesehen, der eine Einlassöffnung aufweist, welche unter dem Dosiersystem für Saatgut angeordnet ist. Die getrennten Saatkörner aus dem Dosiersystem fallen lediglich in den Saatgutleiter und mittels Schwerkraft aus einer Austrittsöffnung des Saatgutleiters direkt in die Saatfurche. Der Saatgutleiter kann in Rückwärtsrichtung gekrümmt sein, damit das Einleiten des Saatguts in die Saatfurche unterstützt wird. Die Rückwärtskrümmung hilft des Weiteren ein Hinundherspringen von Saatkörnern im Saatgutleiter zu reduzieren, wenn diese durch den Saatgutleiter in die Saatfurche fallen. Ferner hilft die Rückwärtskrümmung dabei, ein Aufspringen des Saatgutkorns zu reduzieren, wenn dieses auf den Boden der Saatfurche auftrifft.

Ein Ausbringsystem für Saatgut der antriebsunterstützten Art kann im Wesentlichen in ein förderbandgesteuertes, drehschiebergesteuertes, kettentriebgesteuertes oder druckluftgesteuertes Ausbringsystem klassifiziert werden. Diese Arten von Ausbringsystemen für Saatgut ermöglichen eine gleichmäßigere Ausbringung des Saatguts in gewünschten Abständen entlang eines vorgegebenen Pfades. Für detailliertere Beschreibungen derartiger Ausbringsysteme für Saatgut, sowie für landwirtschaftliche Saatausbringung generell, wird hiermit auf die Ausführungen in "PLANTING FUNDAMENTALS OF MACHINE OPERATION"; Breece, Edward H., PhD, et al.; Deere & Co.; 1981 verwiesen.

Die US 6,332,413 B1 offenbart eine Saatgutführung für eine mit einem Ausbringsystem für Saatgut bestückte Sämaschine. Die Saatgutführung umfasst ein geschlossenes und gekrümmtes Rohr, welches einen sich sanft verjüngenden Verlauf aufweist. Das Rohr ist mit einer Saatgutrinne versehen, die den Verlauf des Saatguts steuert. Über eine sich rotierende Scheibe wird Saatgut in verschiedenen Dosiergeschwindigkeiten in die Saatgutführung geleitet. Nachteilig kann sich auswirken, dass das Saatgut relativ unkontrolliert durch die Saatgutführung fällt.

Die US 6,237,514 B1 offenbart eine Dosiervorrichtung sowie eine Methode zum ausbringen von Saatgut. Über ein Förderband kann Saatgut in unterschiedlichen Größen und Geschwindigkeiten aus einem Sammelbereich für Saatgut in eine Saatgutführung geleitet werden. Auch hier fällt das Saatgut relativ frei und unkontrolliert durch die Saatgutführung.

Die der Erfindung zu Grunde liegende Aufgabe wird darin gesehen, eine Kombination aus Saatgutführung und Geschwindigkeitsregulator vorzuschlagen, mit der Ausbringvorgänge in eine vorbereitete Saatfurche gleichmäßiger durchführbar und die Flugkurve der Saatkörner präziser steuerbar sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Kombination der eingangs genannten Art derart ausgebildet, dass der Geschwindigkeitsregulator in Verbindung zur Saatgutführung positioniert ist, derart, dass das von dem Ausbringsystem in einer voreingestellten Rate aufgenommene Saatgut erfasst und beschleunigt wird.

In einer besonderen Ausgestaltung der Erfindung ist die Saatgutrinne derart ausgebildet, dass sie eine in Richtung von einem oberen Ende zu dem unteren Ende der Saatgutführung zunehmende Tiefe aufweist.

In einer weiteren bevorzugten Ausgestaltung der Erfindung wird eine Sämaschine vorgeschlagen, welche wenigstens ein Dosiersystem für Saatgut und wenigstens ein Ausbringsystem für Saatgut aufweist. Jedes Ausbringsystem steht in Verbindung mit einem entsprechenden Dosiersystem. Jedes Ausbringsystem weist eine Saatgutführung auf, welche ein unteres Ende und eine Saatgutrinne aufweist, die in dem unteren Ende endet.

Ein Vorteil der Erfindung besteht darin, dass die Flugbahn des Saatguts in die Saatfurche als Folge der in der Saatgutführung ausgebildeten Saatgutrinne präziser gesteuert werden kann.

Ein weiterer Vorteil besteht darin, dass die gleichmäßig zunehmende Tiefe der Saatgutrinne in der Saatgutführung für ein sicheres Aufgreifen des Saatguts in einem Aufnahmebereich zwischen Saatgutführung und einem Förderrad sorgt, während sich gleichzeitig eine gleichmäßigere Flugbahn für das Saatgut am unteren Ende der Saatgutführung ausbildet.

Des Weiteren besteht ein Vorteil darin, dass die Saatgutrinne relativ leicht in der Saatgutführung ausgebildet werden kann.

Ferner besteht ein Vorteil darin, dass das Förderrad das Saatgut auf sichere Weise dosiert und beschleunigt.

Ein anderer Vorteil liegt darin, dass am Förderrad vorhandene Borsten, welche am Außenbereich des Förderrads über den Umfang verteilt angeordnet sind, das Saatgut sicher aufnehmen und entlang der Saatgutrinne transportieren können, unabhängig von der Größe und Ausrichtung der Saatgutkörner.

Ein weiterer Vorteil besteht darin, dass eine am Förderrad ausgebildete haftende Außenschicht, welche am Außenbereich des Förderrads über den Umfang verteilt angeordnet ist, durch verschiedene Materialien mit hohem Reibungskoeffizienten ausgebildet sein kann, wie z. B. durch Borsten, Schaumstoff, Leichtschaum, Gewebe, Fasern oder Splitt.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer erfindungsgemäßen Sämaschine mit einer Reihensäeinheit,
- Fig. 2: eine teilweise aufgebrochene Seitenansicht der Reihensäeinheit aus Figur 1, wobei innenliegende Komponenten eines Dosier- und Ausbringsystems für Saatgut dargestellt sind,
- Fig. 3: eine perspektivische Ansicht des Dosier- und Ausbringsystems aus Figur 2 mit einer abgelösten Seitenwand zur Darstellung eines Förderrades und einer Saatgutführung,
- Fig. 4: eine Seitenansicht der Saatgutführung aus Figur 1 bis Figur 3, Ausbringsystems für Saatgut aus Figur 2 und Figur 3,
- Fig. 5: eine Draufsicht der Saatgutführung aus Figur 4 von unten,
- Fig. 6: eine Draufsicht der Saatgutführung aus Figur 4 von rechts,
- Fig. 7: eine Querschnittansicht der Saatgutführung entlang der Linie 7-7 aus Figur 4,
- Fig. 8: eine Querschnittansicht der Saatgutführung entlang der Linie 8-8 aus Figur 4 und
- Fig. 9: eine Endansicht der Saatgutführung bezüglich des unteren Endes der Saatgutführung aus Figur 4.

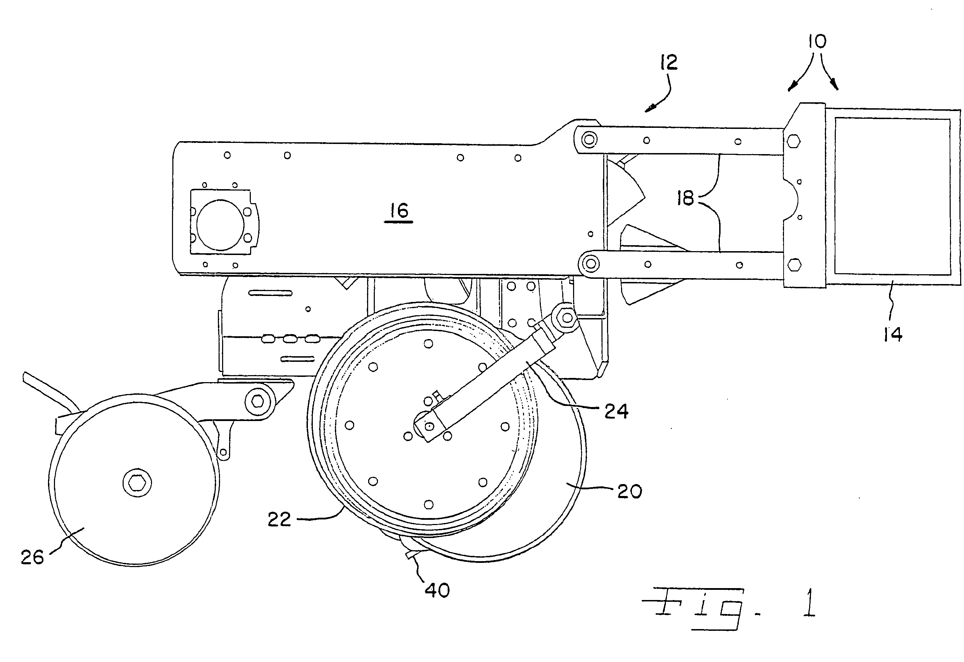

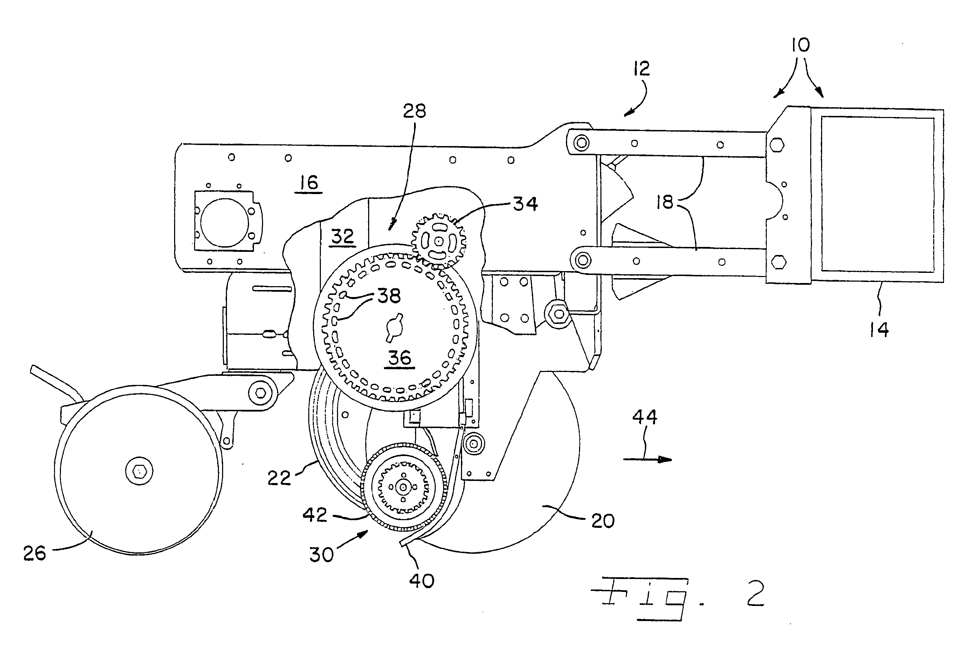

In den Figuren 1 und 2 ist eine erfindungsgemäße Sämaschine 10 dargestellt. Die Sämaschine 10 ist als Reihensämaschine ausgebildet, sie könnte aber auch als Korndrillmaschine etc. ausgebildet sein. Die Figuren 1 und 2 zeigen eine einzelne Reihensäeinheit 12 einer Reihensämaschine mit mehreren Reihensäeinheiten, wobei jede Reihensäeinheit 12 im Wesentlichen identisch ausgebildet und mit einem herkömmlichen Werkzeugträger 14 verbunden ist. Der Einfachheit halber ist nur eine einzelne Reihensäeinheit 12 dargestellt.

Die Reihensäeinheit 12 weist einen mehrteiligen Rahmen 16 auf, welcher durch ein Parallelgestänge 18 an den Werkzeugträger 14 befestigt ist. Der Werkzeugträger 14 ist mit einer Antriebseinheit (nicht gezeigt) verbunden, beispielsweise einem landwirtschaftlichen Traktor. Beispielsweise kann der Werkzeugträger 14 über eine Dreipunkt-Anhängevorrichtung an den landwirtschaftlichen Traktor gekoppelt sein. Der Werkzeugträger 14 kann mit Transporträdern, Markierungsarmen etc. von konventioneller Gestalt, welche der Einfachheit halber nicht dargestellt sind, gekoppelt sein. Die Transporträder sorgen auf bekannte Art und Weise für einen bodengetriebenen Antrieb der Reihensämaschine 12 unter Verwendung von Wellen, Ketten, Zahnrädern, Verteilergetrieben etc.

Der Rahmen 16 trägt einen zweischeibigen Furchenöffner 20, zur Ausbildung einer Saatfurche in einem Ackerboden. Dem Scheibenpaar des zweischeibigen Furchenöffners 20 ist ein entsprechendes Tiefeneinstell-/Schließradpaar 22 zugeordnet. Insbesondere ist jedes Tiefeneinstell-/Schließrad 22 im Wesentlichen in Reihe und unmittelbar neben der Außenseite einer entsprechenden Scheibe des zweischeibigen Furchenöffners 22 angeordnet. Die Tiefeneinstell-/Schließräder 22 sind durch entsprechende Arme 24 schwenkbar mit dem Rahmen 16 verbunden. Jedes Tiefeneinstell-/Schließrad 22 kann vertikal einstellbar angeordnet sein, um die Tiefe einer mit dem zweischeibigen Furchenöffner 20 in den Ackerboden geschnittene Furche einzustellen.

Ein Paar Schließräder 26 wird ebenfalls von dem Rahmen 16 getragen. Die Schließräder 26 sind im Wesentlichen zum zweischeibigen Furchenöffner 20 in Reihe angeordnet.

Wie in Figur 2 dargestellt ist, trägt jede Reihensäeinheit 12 der Sämaschine 10 ein Dosiersystem 28 und ein Ausbringsystem 30 für Saatgut. Das Dosiersystem 28 weist eine Einlassrinne 32 auf, welche Saatgut aus einer Saatguthauptversorgung, wie z. B. einem über dem Rahmen 16 getragenen Saatgutbehälter aufnimmt. Alternativ kann das Saatgut auch in einem entfernt gelegenen Saatguthauptbehälter enthalten sein und über Druckluft oder dergleichen der Einlassrinne 32 zugeführt werden.

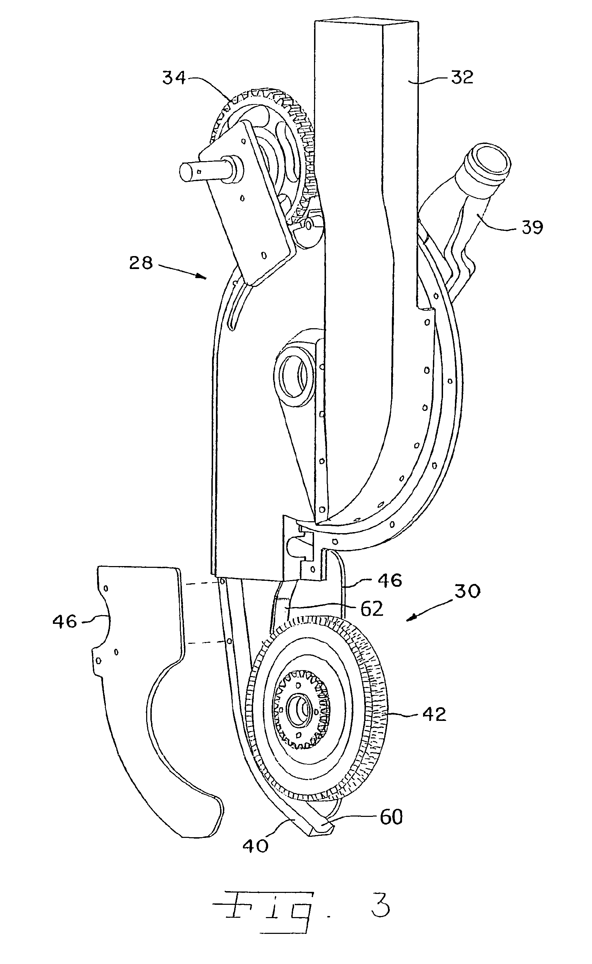

Das Dosiersystem 28 weist des Weiteren ein Antriebsrad 34 auf, welches eine Saatgutscheibe 36 antreibt, die mit mehreren und über den Umfang intermittierend beabstandeten Saatgutzellen 38 versehen ist. Ein Verbindungsstück 39 (siehe Figur 3) ist fließend mit einer Vakuumeinrichtung (nicht gezeigt) verbunden, welche ein Unterdruck in den in der Saatgutscheibe 36 ausgebildeten Saatgutzellen 38 erzeugt. Dieser Unterdruck erzeugt ein Eindringen von Saatgut in die Saatgutzellen 38 und hält das Saatgut in den Saatgutzellen 38 an seinem Platz. Das Saatgut wird von den Saatgutzellen 38 zu dem Ausbringsystem 30 gebracht.

Das Ausbringsystem 30 weist eine Saatgutführung 40 und ein Förderrad 42 auf. Die Saatgutführung 40 führt Saatgut in einer vorbestimmten Menge in die durch den zweischeibigen Furchenöffner 20 ausgebildete Saatfurche. Die Saatgutführung 40 weist in Querrichtung zur Saatfurche eine Breite auf, die geringer als die Breite der Saatfurche ist, jedoch auch in etwa gleich der Breite der Saatfurche sein kann.

Das Förderrad 42, definiert ein Geschwindigkeitsregulator für Saatgut und weist einen Umfangsbereich auf, welcher an der oder nahe angrenzend zur Saatgutführung 40 positioniert ist. Das Förderrad 42 erfasst das von dem Ausbringsystem 30 in einer voreingestellten Rate aufgenommene Saatgut und beschleunigt das Saatgut auf eine Geschwindigkeit, die im Wesentlichen der Fahrgeschwindigkeit in Fahrtrichtung 44 der Sämaschine 10 entspricht. Das Förderrad 42 und die Saatgutführung 40 wirken zusammen, um das Saatgut in einem gewünschten Bewegungsablauf und einer gewünschten Geschwindigkeit auszubringen.

Auf beiden Seiten des Förderrads 42 sind Seitenwände 46 positioniert, die an die Saatgutführung 40 befestigt sind. Die Seitenwände 46 und die Saatgutführung 40 definieren gemeinsam ein Gehäuse, welches teilweise das Förderrad 42 umgibt.

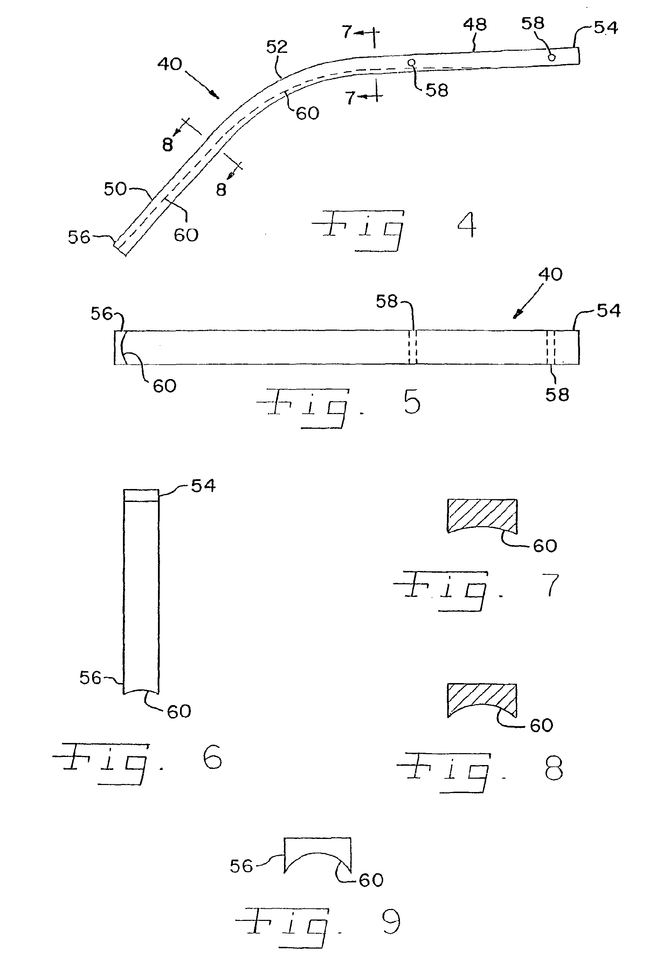

Die Saatgutführung 40 wird im Folgenden genauer anhand der Figuren 4 bis 9 dargestellt. Die Saatgutführung 40 weist eine im Wesentlichen j-förmige Ausbildung auf und enthält zwei im Wesentlichen gerade Abschnitte 48, 50, die durch einen bogenförmigen Abschnitt 52 miteinander verbunden sind. Der gerade Abschnitt 48 definiert ein oberes Ende 54 der Saatgutführung 40 und der gerade Abschnitt 50 ein unteres Ende 56 der Saatgutführung 40. Der gerade Abschnitt 48 weist ein Paar von Montagebohrungen 58 auf, welche Befestigungsschrauben zur Montage der Seitenwände 46 an die gegenüberliegenden Kantenflächen der Saatgutführung 40 aufnehmen. Der gerade Abschnitt 50 ist in einem vorbestimmten Winkel relativ zum Boden positioniert.

Die Saatgutführung 40 weist eine Saatgutrinne 60 auf, welche am unteren Ende 56 endet. Die Saatgutrinne 60 weitet sich nicht bis in das obere Ende 54 der Saatgutführung 40 aus, wobei ihre Tiefe kontinuierlich vom oberen Ende 54 zum unteren Ende 56 hin zunimmt. In dem gezeigten Ausführungsbeispiel nimmt die Saatgutrinne 60 im Wesentlichen linear vom oberen Ende 54 zum unteren Ende 56 an Tiefe zu. Des Weiteren weist die Saatgutführung 40, wie im Ausführungsbeispiel dargestellt ist, in Querrichtung eine Breite von ca. 19 mm auf, wobei die Saatgutrinne dementsprechend eine Breite von ca. 19 mm am unteren Ende 56 aufweist.

Die Saatgutrinne 60 weist eine maximale Tiefe von ca. 5 mm am unteren Ende 56 auf. Die zunehmende Tiefe der Saatgurinne 60 gewährleistet, dass am unteren Ende 56 der Saatgutführung 40 die Tiefe ein Maximun erreicht, so dass sich für das Saatgut eine genauere Flugbahn in die Saatfurche einstellt. Des Weiteren gewährleistet die geringere Tiefe im angrenzenden Bereich zum Förderrad 42, dass an der Saatgutführung 40 durch das Förderrad 42 eine Aufnahme stattfindet, wodurch das Saatgut zur Beschleunigung sicher aufgegriffen wird.

Die Saatgutführung 40 kann aus jedem geeigneten Material, wie z. B. Metall, Plastik oder dergleichen, gefertigt werden. Des Weiteren kann die Saatgutführung 40, in Abhängigkeit von der einzelnen Anwendung, mit herkömmlichen Fertigungs- und Biegeverfahren oder mit einem Spritzgussverfahren geformt werden.

Während des Betriebs wird ausgewähltes Saatgut aus einer Hauptversorgungsstelle für Saatgut von der Einlassrinne 32 des Dosiersystems 28 aufgenommen. Das Saatgut wird gegen eine Seite der Saatgutscheibe 36 gehalten, wobei die Saatgutscheibe 36 durch das Antriebsrad 34 mit einer vorgegebenen Drehzahl unter Verwendung von einem mechanischen Antrieb, hydraulischen Motor, Elektromotor oder einem anderen geeigneten Antrieb angetrieben wird. Das Saatgut wird in Saatgutzellen 38 in der Saatgutscheibe 36 aufgenommen. Um das Befördern des Saatguts in die Saatgutzellen 38 zu unterstützen wird die gegenüberliegende Seite der Saatgutscheibe 36 unter Verwendung von einer geeigneten Vakuumquelle mit einem Unterdruck beaufschlagt. Selbstverständlich kann auch ein Überdruck auf der Seite der Saatgutscheibe angewendet werden, auf der das Saatgut eingebracht wird. Das Saatgut wird von dem Dosiersystem 28 mit einer vorgegebenen Rate durch eine Auslassrinne abgegeben. Ein Leitelement 62 unterstützt das Einführen des Saatguts in einen Aufnahmespalt, welcher zwischen Förderrad 42 und Saatgutführung 40 ausgebildet ist. Das Leitelement 62 kann ebenfalls örtlich die Borsten einer äußeren Greifschicht am Föderrad 42 ablenken, wenn diese daran entlang rotieren. Die Ablenkung der Borsten unterstützt das Aufgreifen des Saatguts und das Befördern des Saatguts in den zur Saatgutführung 40 benachbarten Aufnahmespalt. Ein Zwischenraum von näherungsweise 1 mm zwischen dem Umfangsbereich des Förderrads 42 und der Saatgutführung 40 stellt sicher, dass das Saatgut von der äußeren Greifschicht aufgegriffen wird, ohne dabei zu viel Kraft auf das Saatgut auszuüben. Eine elastische mittlere Schicht des Förderrads 42 kann auch, je nach Größe und/oder Ausrichtung der Saatgutkörner, von dem Saatgut eingedrückt werden, wenn dieses in den Bereich zwischen Förderrad 42 und Saatgutführung 40 eintritt. Die Führungsrinne 60 nimmt in ihrer Tiefe kontinuierlich zu und hält das Saatgut entlang der Längsachse der Saatgutführung 40. Das Saatgut wird beschleunigt, um in etwa die Vorwärtsfahrgeschwindigkeit der Sämaschine 10 zu erreichen und wird von der Führungsrinne 60 am unteren Ende 48 in die in dem Ackerboden ausgebildete Saatfurche abgelegt. Tiefeneinstell-/Schließräder 22 und Schließräder 26 schließen die Saatfurche und bedecken dadurch das in der Saatfurche befindliche Saatgut.

## Patentansprüche

1. Kombination aus einer Saatgutführung und einem rotierbaren Geschwindigkeitsregulator für Saatgut für ein Ausbringsystem (30) einer Sämaschine (10), mit einer Saatgutführung (40), welche im Wesentlichen j-förmig ausgebildet ist, mit zwei im Wesentlichen geraden Abschnitten (48, 50), welche durch einen bogenförmigen Abschnitt (52) miteinander verbunden sind, wobei einer der geraden Abschnitte (48, 50) ein unteres Ende (56) ausbildet, und mit einer Saatgutrinne (60), welche an dem unteren Ende (56) endet, **dadurch gekennzeichnet, dass** der Geschwindigkeitsregulator (42) in Verbindung zur Saatgutführung (40) positioniert ist, derart, dass das von dem Ausbringsystem (30) in einer voreingestellten Rate aufgenommene Saatgut erfasst und beschleunigt wird.

2. Kombination nach Anspruch 1, **dadurch gekennzeichnet, dass** der andere gerade Abschnitt (48, 50) ein oberes Ende (54) ausbildet und die Saatgutrinne (60) sich nicht bis zu dem oberen Ende (54) erstreckt.

3. Kombination nach Anspruch 2, **dadurch gekennzeichnet, dass** die Saatgutrinne (60) in Richtung vom oberen Ende (54) zum unteren Ende (56) eine zunehmende Tiefe aufweist.

4. Kombination nach einem der vorhergehenden Ansprüche, **dadurch gekennzeichnet, dass** die Saatgutrinne (60) am unteren Ende (56) eine maximale Tiefe aufweist.

5. Kombination nach einem der vorhergehenden Ansprüche, **dadurch gekennzeichnet, dass** die Saatgutrinne (60) am unteren Ende (56) einen im Wesentlichen parabolförmig ausgebildeten Querschnitt aufweist.

6. Sämaschine, mit wenigstens einem Dosiersystem (28) für Saatgut, wenigstens einem Ausbringsystem (30) für Saatgut, wobei das wenigstens eine Ausbringsystem (30) mit einem entsprechenden Dosiersystem (28) in Verbindung steht und wobei das wenigstens eine Ausbringsystem (30) eine Kombination aus Saatgutführung (40) und Geschwindigkeitsregulator enthält, **dadurch gekennzeichnet, dass** die Kombination nach einem der vorhergehenden Ansprüche ausgebildet ist.

7. Sämaschine nach Anspruch 6, **dadurch gekennzeichnet, dass** der Geschwindigkeitsregulator ein Förderrad (42) aufweist.

## Claims

1. A combination of a seed guide and a rotatable speed regulator for seeds for a placement system (30) of a seeder (10), with a seed guide (40) which is essentially J-shaped, with two substantially straight sections (48, 50) which are connected together by an arcuate section (52), wherein one of the straight sections (48, 50) forms a lower end (56), and with a seed trough (60) which terminates at the lower end (56), **characterized in that** the speed regulator (42) is so positioned in conjunction with the seed guide (40) that the seeds received at a preset rate from the placement system (30) are engaged and accelerated.

2. A combination according to claim 1, **characterized in that** the other straight section (48, 50) forms an upper end (54) and the seed trough (60) does not extend up to the upper end (54).

3. A combination according to claim 2, **characterized in that** the seed trough (60) has an increasing depth from the upper end (54) to the lower end (56).

4. A combination according to any of the preceding claims, **characterized in that** the seed trough (60) has a maximum depth at the lower end (56).

5. A combination according to any of the preceding claims, **characterized in that** the seed trough (60) has at the lower end (56) a substantially parabola shaped cross-section.

6. A seeder with at least one metering system (28) for seeds, at least one placement system (30) for seeds, wherein the at least one placement system (30) is connected to a corresponding metering system (28) and wherein the at least one placement system (30) includes a combination of seed guide (40) and speed regulator, **characterized in that** the combination is formed in accordance with any of the preceding claims.

7. A seeder according to claim 6, **characterized in that** the speed regulator comprises a conveyor wheel (42).

## Revendications

1. Combinaison, formée par un dispositif de guidage des semences et un régulateur de vitesse des semences rotatif, destinée à un système de distribution (30) d'un semoir (10), comportant un dispositif de guidage des semences (40), qui est réalisé sensiblement en forme de J avec deux parties (48, 50) sensiblement droites qui sont reliées l'une à l'autre par une partie courbe (52), une des parties droites (48, 50) formant une extrémité inférieure (56), et avec une goulotte pour semences (60), qui se termine au niveau de l'extrémité inférieure (56), **caractérisée en ce que** le régulateur de vitesse (42) est positionné par rapport au dispositif de guidage des semences (40) de manière à saisir et accélérer les semences reçues selon un débit prédéfini par le système de distribution (30).

2. Combinaison selon la revendication 1, **caractérisée en ce que** l'autre partie droite (48, 50) forme une extrémité supérieure (54) et la goulotte pour semences (60) ne s'étend pas jusqu'à l'extrémité supérieure (54).

3. Combinaison selon la revendication 2, **caractérisée en ce que** la goulotte pour semences (60) a une profondeur croissante, à partir de l'extrémité supérieure (54) vers l'extrémité inférieure (56).

4. Combinaison selon l'une quelconque des revendications précédentes, **caractérisée en ce que** la goulotte pour semences (60) a une profondeur maximale au niveau de l'extérieur inférieure (56).

5. Combinaison selon l'une quelconque des revendications précédentes, **caractérisée en ce que** la goulotte pour semences (60) au niveau de l'extrémité inférieure (56) a une section réalisée sensiblement en forme de parabole.

6. Semoir comportant au moins un système de dosage (28) pour des semences, au moins un système de distribution (30) pour des semences, ledit au moins un système de distribution (30) communiquant avec un système de dosage (28) correspondant et ledit au moins un système de distribution (30) comportant une combinaison formée par un dispositif de guidage des semences (40) et un régulateur de vitesse, **caractérisé en ce que** la combinaison est réalisée selon l'une quelconque des revendications précédentes.

7. Semoir selon la revendication 6, **caractérisé en ce que** le régulateur de vitesse comporte une roue de transport (42).
